**Europäisches Patentamt**

(19) **European Patent Office**

**Office européen des brevets**

(11) Veröffentlichungsnummer: **0 124 093 B1**

(12)

# EUROPÄISCHE PATENTSCHRIFT

(45) Veröffentlichungstag der Patentschrift:
**19.11.87**

(51) Int. Cl.⁴: **B 62 D 25/14**, B 62 D 65/00

(21) Anmeldenummer: **84104712.9**

(22) Anmeldetag: **26.04.84**

(54) **Vormontierte Baueinheit für den Cockpit-Bereich von Kraftfahrzeugen, insbesondere Personenkraftwagen, und Verfahren zum Einbau einer solchen vormontierten Baueinheit.**

(30) Priorität: **29.04.83 DE 3315646**
**20.08.83 DE 3330140**

(43) Veröffentlichungstag der Anmeldung:
**07.11.84 Patentblatt 84/45**

(45) Bekanntmachung des Hinweises auf die Patenterteilung:
**19.11.87 Patentblatt 87/47**

(84) Benannte Vertragsstaaten:
**DE FR GB IT SE**

(56) Entgegenhaltungen:
**DE - A - 3 119 572**
**DE - A - 3 149 083**
**DE - B - 1 181 566**
**US - A - 4 126 202**
**US - A - 4 372 410**

(73) Patentinhaber: **Adam Opel Aktiengesellschaft,
Bahnhofsplatz 1 Postfach 1560, D-6090 Rüsselsheim
(DE)**

(72) Erfinder: **Köchy, Fritz, Schlesische Strasse 24,
D-6500 Mainz (DE)**
Erfinder: **Brandel, Klaus, Kl. Albanus Strasse 3,
D-6501 Wörrstadt (DE)**
Erfinder: **Hullmann, Horst, Am Alten Berg 6,
D-6093 Flörsheim (DE)**
Erfinder: **Neumann, Bernhard, Böhmerwaldstrasse 2,
D-6090 Rüsselsheim (DE)**
Erfinder: **Helmsing, Gerhard, Am Honigbaum 6,
D-6239 Eppstein (DE)**

(74) Vertreter: **Elbert, Karl, Dipl.-Ing. et al, Adam Opel AG
Bahnhofsplatz 1 Postfach 1560, D-6090 Rüsselsheim
(DE)**

## Beschreibung

Die Erfindung bezieht sich auf eine vormontierte Baueinheit nach dem Oberbegriff des Patentanspruches 1.

Bei der Herstellung von Kraftfahrzeugen besteht zunehmend das Bestreben, einzelne Teile nicht mehr separat zu montieren, sondern mehrere Teile zu vormontierten Baugruppen zusammenzufassen und diese grösseren Baueinheiten dann im Fahrzeug einzubauen. Hierdurch können Verbesserungen und Erleichterungen der Arbeitsbedingungen und Montageoperationen erreicht werden.

Bei Kraftfahrzeugen, insbesondere Personenkraftwagen, ist die Cockpit-Zone der montageintensivste Bereich der Karosserie. Hier häufen sich die verschiedensten Aggregate zur Betätigung, Steuerung und Kontrolle des Fahrzeuges. Aber auch die dem Komfort dienenden Einrichtungen, wie Heizung und Lüftung, Radio usw. sind vorwiegend im Cockpit-Bereich konzentriert.

Eine vormontierte Baueinheit der eingangs genannten Art, in der Fachsprache auch als Cockpit-Modul bezeichnet, ist durch die DE-A-3 119 572 bekannt geworden.

Diese Druckschrift offenbart im einzelnen eine Bauteile-Anordnung, die eine Trennwand zwischen einem Fahrgastraum und einem Motorraum eines Kraftfahrzeuges bildet. Hierbei umfasst die bekannte Bauteile-Anordnung erklärtermassen (s. S. 8, Abs. 3 der DE-A-3 119 572) ein erstes, wie eine Zwischenwand gestaltetes Bauteil, das aus einem ersten Kunststoff besteht und eine Breite und Höhe aufweist, die im wesentlichen gleich der Breite der tragenden Struktur (Abstand zwischen den Holmen) bzw. dem Abstand zwischen dem Boden und der Windschutzscheibe des Fahrgastraumes ist. Diese Zwischenwand könnte von der reinen Geometrie her noch mit einer Stirnwand im Sinne der vorliegenden Erfindung verglichen werden, jedoch nicht von der Funktion her. Denn bei der bekannten Zwischenwand nach DE-A-3 119 572 handelt es sich im Unterschied zur vorliegenden Erfindung nicht um ein tragendes Bauteil. Dies kann auch von einem Kunststoffteil gar nicht in dem Masse erwartet werden wie von einer aus Metall bestehenden Stirnwand, wie sie Bestandteil des vorliegenden Anmeldungsgegenstandes ist. Vielmehr fungiert beim bekannten Gegenstand nach DE-A-3 119 572 als tragendes Bauelement ein mit «Struktur 1» bezeichnetes Teil, das – wie Fig. 1 der DE-A deutlich macht – aus mehreren miteinander verbundenen metallischen Rahmenteilen (Holme und Querstreben) besteht, welche gerippeartig Struktur und Konturen des Fahrzeugvorderbaus bestimmen. Die aus Kunststoff bestehende Zwischenwand stellt hier also nur ein den Rahmenbereich zwischen Motorraum und Fahrgastzelle ausfüllendes bzw. verschliessendes Konstruktionselement dar. Es ist – abweichend vom Gegenstand der vorliegenden Erfindung – weder dazu bestimmt noch geeignet, eine tragende Basis für eine vormontierte Baueinheit bzw. eine «Bauteile-Anordnung» zu bilden.

Das im vorstehenden zum «ersten Bauteil» Gesagte gilt im besonderen Masse auch für ein als «zweites Bauteil» bezeichnetes Konstruktionselement der bekannten Anordnung nach DE-A-3 119 572. Dieses «zweite Bauteil» besteht nämlich ebenfalls nur aus Kunststoff, wobei dieser Kunststoff sogar eine noch geringere Härte und mechanische Widerstandsfähigkeit besitzen soll als der Kunststoff, aus dem das «erste Bauteil» besteht. Denn das «zweite Bauteil» ist weniger mechanischen Belastungen ausgesetzt. Hier wird nun der entscheidende Unterschied zum Gegenstand der vorliegenden Anmeldung besonders deutlich. Beim Stirnwandquerträger gemäss der vorliegenden Erfindung handelt es sich nämlich – wie die Bezeichnung «. . . Träger» schon sagt – um ein Bauteil, das in besonderer Weise zur Erfüllung tragender Funktionen geeignet sein muss. Es wäre also völlig abwegig, wollte man den Stirnwandquerträger beim Gegenstand der vorliegenden Anmeldung aus einem vergleichsweise weichen Kunststoffmaterial herstellen wie das «zweite Bauteil» beim Gegenstand der DE-A-3 119 572. Ein solcher Kunststoff-Stirnwandträger vermöchte nicht annähernd die ihm beim Gegenstand der vorliegenden Erfindung zugewiesenen Funktionen zu erfüllen.

Eine dem eingangs bezeichneten Gegenstand ähnliche vormontierte Baueinheit ist des weiteren durch die US-A-4 126 202 bekannt geworden. Der bekannte Cockpit-Modul, der für Traktoren vorgesehen ist, basiert auf einem kastenartigen Rahmen, an dem die Armaturentafel, die Lenkung, die Pedale und andere der Fahrgastzelle zugeordnete Aggregate und Instrumente zu einer in ihrer Gesamtheit in der Karosserie des Traktors montierbaren Baueinheit zusammengefasst sind.

Eine weitere vormontierte Baueinheit, ähnlich derjenigen der eingangs bezeichneten Gattung, ist durch die deutsche Patentanmeldung DE-A-3 149 083 Stand der Technik geworden. Hierbei werden eine ganze Anzahl von Aggregaten und Komponenten des Cockpit-Bereichs auf einem Rahmen vormontiert, der nach Montage der Baueinheit im Fahrzeug anschliessend wieder aus der Karosserie entfernt wird. Eine Stirnwand-Schliessplatte ermöglicht es, einige wichtige Aggregate und Kabelbündel aus dem Fahrgastraum durch die Stirnwand in den Motorraum hindurchzuführen.

Durch die bekannten Massnahmen wird zwar bereits eine erhebliche Vereinfachung und Erleichterung bei der Fahrzeugmontage insgesamt erreicht. Dennoch bleiben für den Cockpit-Bereich weiterhin schwierige, im einzelnen am Fahrzeug selbst vorzunehmende Montageoperationen bestehen. Dies wird deutlich, wenn man sich vergegenwärtigt, dass der Cockpit-Bereich ja nicht nur die fahrgastraumseitigen Betätigungselemente, Aggregate, Instrumente usw. umfasst. Wichtige weitere Aggregate und Komponenten des Cockpit-Bereichs befinden sich vielmehr auch jenseits der Stirnwand, d.h. motorraumseitig, oder müssen vom Fahrgastraum kommend durch die Stirnwand hindurch in den Motorraum geführt und dort fertigmontiert werden.

Aufgabe der vorliegenden Erfindung ist es, bei einer vormontierten Baueinheit der eingangs bezeichneten Art geeignete Massnahmen dafür zu treffen, dass auch die dem Cockpit-Bereich zuzurechnenden wesentlichen Aggregate und Komponenten, die ihren Sitz jenseits der Stirnwand, d.h. motorraumseitig, haben, in die vormontierte Baueinheit integriert werden können.

Erfindungsgemäss wird die Aufgabe durch die im kennzeichnenden Teil des Patentanspruches 1 angegebenen Merkmale gelöst. Die Erfindung besteht demgemäss nicht nur in dem Gedanken, den Stirnwandquerträger aus der Rohkarosserie herauszulösen und selbst zur Grundlage einer Montageeinheit zu machen. Hinzu kommt vielmehr noch ein zweiter wesentlicher Schritt, nämlich die Integration des Stirnwandquerträgers in die bereits eine Montagebasis für eine vergleichsweise grosse Baueinheit bildende Stirnwand, der er die nötige Steifigkeit gibt und damit zur Möglichkeit des Einfahrens des Moduls beiträgt.

Im Zusammenhang damit bestehen wichtige Verfahrensmassnahmen der Erfindung für den Einbau der erfindungsgemässen vormontierten Baueinheit darin, dass die vormontierte Baueinheit von oben nach unten durch die Windschutzscheibenöffnung der Karosserie eingefahren und anschliessend an Stirnwand und Stirnwandquerträger mit den angrenzenden Karosseriewänden dichtend verbunden wird. Windschutzscheibe und Motorhaube werden also erst nach Einbau der vormontierten Baueinheit montiert.

Durch die Erfindung wird es möglich, insbesondere noch folgende wichtige Aggregate und Komponenten in die vormontierte Baueinheit mit einzubeziehen: Lenkgetriebe, Booster, Bremspedaleinstellung, Scheibenwischeranlage mit Antriebsmotor, Heizungsgebläse, Gebläse Klimaanlage mit Luftführung, Bodenzüge für Haube, Scheinwerferregulierung u.a., Isolationsmatte Motorraum, Isolationsmatte Fahrgastraum, Wasserkanister, Scheibenwaschanlage und Scheinwerferreinigung, Wasserausgleichsbehälterkühler, Konsole (Fahrgastraum) sowie darüber hinaus alle weiteren Teile, die entsprechend der Fahrzeugausrüstung an der Stirnwand aussen oder innen angeordnet sind, z.B. elektrische, elektronische Komponenten (Prozessrechner, ABV Anlage usw.).

Durch die Erfindung ist es somit möglich geworden, alle Teile und Komponenten, die vor oder hinter der Stirnwand angeordnet sind, oder durch die Stirnwand hindurchgeführt werden, ausserhalb der Karosserie an einem speziellen (montageoptimierten) Montageband zu einer kompletten Cockpit-Baueinheit (Cockpit-Modul) vorzumontieren und diese Baueinheit anschliessend von oben nach unten in die Rohkarosserie einzusetzen.

Ein weiterer Vorteil der Erfindung besteht darin, dass kein separater Montagerahmen mehr benötigt wird, der nach der Endmontage der Baueinheit wieder aus der Karosserie entfernt werden müsste. Denn die Funktion eines «Montagerahmens» wird ja erfindungsgemäss von Stirnwand und Stirnwandquerträger übernommen, die nach der Endmontage der Baueinheit als wichtige Bestandteile der Karosserie selbstverständlich in derselben verbleiben.

Durch die Erfindung werden weiterhin vorteilhaft Blindoperationen vermieden und damit eine erhebliche Reduzierung der Fehlerrate ermöglicht. Alle Montageoperationen können in normaler Körperhaltung ausgeführt werden. Ungünstige Körperhaltungen, wie sie bei Montagevorgängen innerhalb der Karosserie erforderlich wären, lassen sich also durch die Erfindung vorteilhaft vermeiden.

Die erfindungsgemässe vormontierte Baueinheit kann vor dem Einbau in den Wagen einem Funktionstest unterzogen werden. Mögliche Fehler können hierbei über einen zentralen Vielfachstecker, welcher nach dem Einbau die gesamte Elektrik mit dem Hauptkabelsatz verbindet, auf einem Diagnoseprüfstand ermittelt und lokalisiert werden und lassen sich schnell und leicht beheben.

Zusammenfassend kann gesagt werden, dass durch die mit der Erfindung geschaffenen verbesserten Montagebedingungen, einschliesslich des damit möglich umfassenden Funktionstests die Fehlerrate der betreffenden Serienfahrzeuge erheblich reduziert wird, aufwendige und kostspielige Nacharbeiten somit weitgehend vermieden werden können. In Verbindung mit verbesserter Produktivität und verbesserten ergonomischen Arbeitsbedingungen wird eine Steigerung der Zuverlässigkeit der betreffenden Fahrzeuge erzielt.

In vorteilhafter Weiterbildung des konstruktiven Teils der Erfindung werden die im Patentanspruch 1 angegebenen Massnahmen vorgeschlagen. Diese Ausführungsform bietet gegenüber einer Variante, bei der die Baueinheit mittels in Fahrzeuglängsrichtung gerichteter Schrauben mit den angrenzenden Karosseriewänden verbunden ist, den Vorteil, dass an den beiden die Hauptbefestigungsstellen bildenden A-Säulen stummelartig nach innen ragende Trägeranschlüsse überflüssig werden. Durch den Wegfall derartiger Trägeranschlüsse wird vorteilhafterweise eine Erweiterung der Konstruktionsbreite und des Bauraumes für das Heizungs- und Klimagebläse erreicht. Im einzelnen lassen sich im Vergleich zu einer Längsverschraubung folgende Vorteile erreichen:

Es entfallen die oben erwähnten zusätzlichen Anschlussteile (nach innen ragende Stummel) an den A-Säulen. Hierdurch werden nicht unwesentliche Kosten- und Gewichtseinsparungen erzielt. Ein torsionssteiferer Anschluss des Stirnwandquerträgers wird ermöglicht. Es ist eine genauere Einhaltung der Karosseriebreite möglich, da diese nur von der Längentoleranz des Stirnwandquerträgers abhängig ist. Es lassen sich genauere Passungen bei der Scheibenöffnung und der Fronthaube erzielen, wodurch sich insgesamt ein Qualitätsvorteil ergibt. Der durch die Querverschraubung gegebene breitere Bauraum zwischen den A-Säulen ermöglicht ein Gebläse für Heizung bzw. Klimaanlage mit besserem Wirkungsgrad und grösserem Luftdurchsatz.

Weitere vorteilhafte Ausgestaltungen der Erfindung können im einzelnen den übrigen Patentansprüchen sowie – anhand von Ausführungsbeispielen – der Zeichnung und der nachstehenden Beschreibung entnommen werden. Es zeigt:

Fig. 1 die vordere Hälfte einer Pkw-Karosserie, in perspektivischer Darstellung,

Fig. 2 eine Pkw-Karosserie im Querschnitt (schematisch),

Fig. 3 eine (teilweise) Seitenansicht einer Pkw-Karosserie,

Fig. 4 einen Horizontalschnitt (linke Seite) des Karosseriebereiches A-Säule/Frontscheibe, in gegenüber Fig. 1–3 vergrösserter Darstellung,

Fig. 5 den Karosseriebereich nach Fig. 4, in perspektivischer Ansicht (vom Fahrgastraum aus gesehen),

Fig. 6 die Einzelheit «A» aus Fig. 3, in Montagestellung und in gegenüber Fig. 3 stark vergrösserter Darstellung,

Fig. 7 den vorderen Bereich einer Pkw-Karosserie, in Draufsicht (schematisch),

Fig. 8 die Einzelheit «B» aus Fig. 1, in Draufsicht gesehen und in gegenüber Fig. 1 vergrösserter Darstellung,

Fig. 9 und 10 je eine Ausführungsform einer dichtenden Verbindung zwischen Stirnwand und angrenzenden Wänden einer Pkw-Karosserie, in Schnittdarstellung,

Fig. 11 eine Darstellung ähnlich Fig. 1, jedoch mit in Einbaulage befindlicher vormontierter Baueinheit,

Fig. 12 und 13 zwei verschiedene Ausführungsformen von Stirnwand und Stirnwandquerträger einer Pkw-Karosserie, jeweils in perspektivischer Explosionsdarstellung,

Fig. 14 eine gegenüber Fig. 1 bis 13 abgewandelte Ausführungsform, in Darstellung entsprechend Fig. 1,

Fig. 15 einen Horizontalschnitt durch die linke A-Säule des Fahrzeuges (Schnitt XV–XV in Fig. 14), wobei sich die in Fig. 14 separat gezeigte Befestigungsschraube in Montagestellung befindet, und

Fig. 16 eine weitere Ausführungsform, in Schnittdarstellung entsprechend Fig. 15.

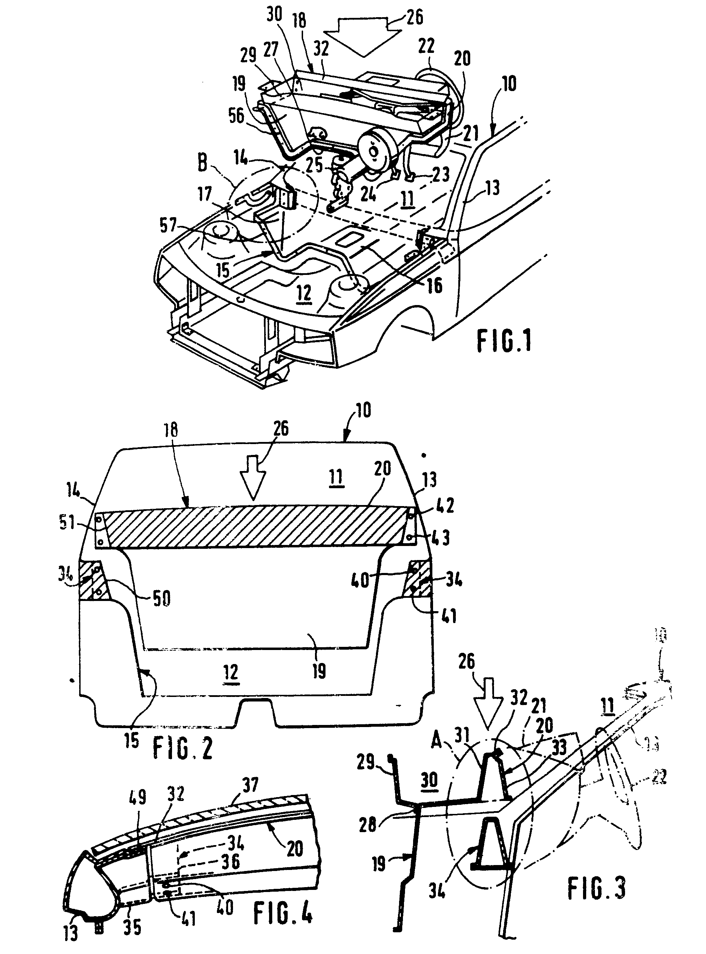

Nach Fig. 1–5 bezeichnet 10 eine vormontierte Rohkarosserie eines Personenkraftwagens. Eine für die Frontscheibe (Windschutzscheibe) vorgesehene Öffnung der Karosserie 10 ist mit 11 beziffert. Der nach oben hin offene (Motorhaube also noch nicht montiert) Motorraum trägt insgesamt das Bezugszeichen 12. Die den seitlichen Abschluss der Frontscheibenöffnung 11 bildenden sog. A-Säulen sind mit 13 und 14 bezeichnet. Innerhalb der Karosserie 10 ist u.a. ferner erkennbar der Unterbau 15 mit Getriebetunnel 16, einschliesslich den sog. Radeinbau bildenden Seitenwänden 17.

Etwas oberhalb der Karosserie 10 schwebend (die Tragvorrichtung ist nicht gezeigt) ist in Fig. 1 eine insgesamt mit 18 bezeichnete vormontierte Baueinheit dargestellt. Es handelt sich hierbei um den Cockpit-Bereich des Fahrzeugs, auch als Cockpit-Modul bezeichnet. Ein wesentlicher Bestandteil der Baueinheit 18, weil als Vormontagebasis für diese dienend, ist eine Karosserie-Stirnwand 19 mit sich oben anschliessendem Stirnwandquerträger 20. Stirnwand 19 und Stirnwandquerträger 20, die normalerweise der Karosserie 10 zugeordnet wären, sind also zunächst von der Karosserie 10 losgelöst und der auf einem separaten Montageband (nicht gezeigt) vormontierten Baueinheit 18 zugeordnet, wobei sie gleichzeitig gewissermassen deren Tragrahmen bilden.

Fig. 1 lässt weitere wesentliche Bestandteile des die Baueinheit 18 bildenden vormontierten Cockpit-Bereichs erkennen: Armaturentafel 21, Lenkung 22, Kupplungspedal 23, Bremspedal 24, Lenkgetriebe 25 u.a.m. Eine vollständigere Aufzählung der in der vormontierten Baueinheit 18 vereinigten Aggregate, Komponenten und Betätigungselemente befindet sich im Text weiter oben, worauf hier verwiesen werden soll. Die vormontierte Baueinheit 18 umfasst demnach nicht nur die fahrgastraumseitigen Aggregate des Cockpit-Bereichs, sondern auch diejenigen Aggregate, welche jenseits der Stirnwand 19, also motorraumseitig liegen.

Der Einbau der in Fig. 1 und 2 jeweils noch oberhalb ihrer eigentlichen Endmontagestellung gezeigten vormontierten Baueinheit 18 erfolgt von oben nach unten (Pfeilrichtung 26 in Fig. 1–3), also durch die Öffnungen 11 von Frontscheibe und Motorraum 12. Wie die Konturen der Stirnwand 19, insbesondere in Fig. 1, erkennen lassen (man beachte hierbei insbesondere eine mit 27 bezifferte Getriebetunnelaussparung), schliesst sich die Stirnwand 19 in ihrer Einbaulage an die angrenzenden Karosseriewände, z.B. 17, des Fahrzeugunterbaues 15 an und wird mit diesen fest verbunden.

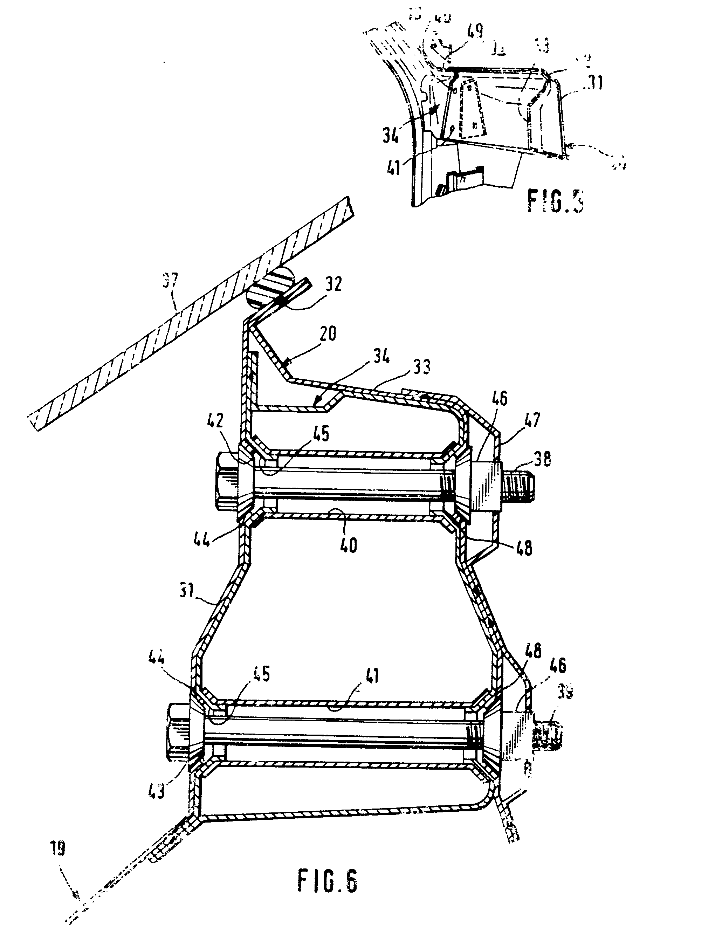

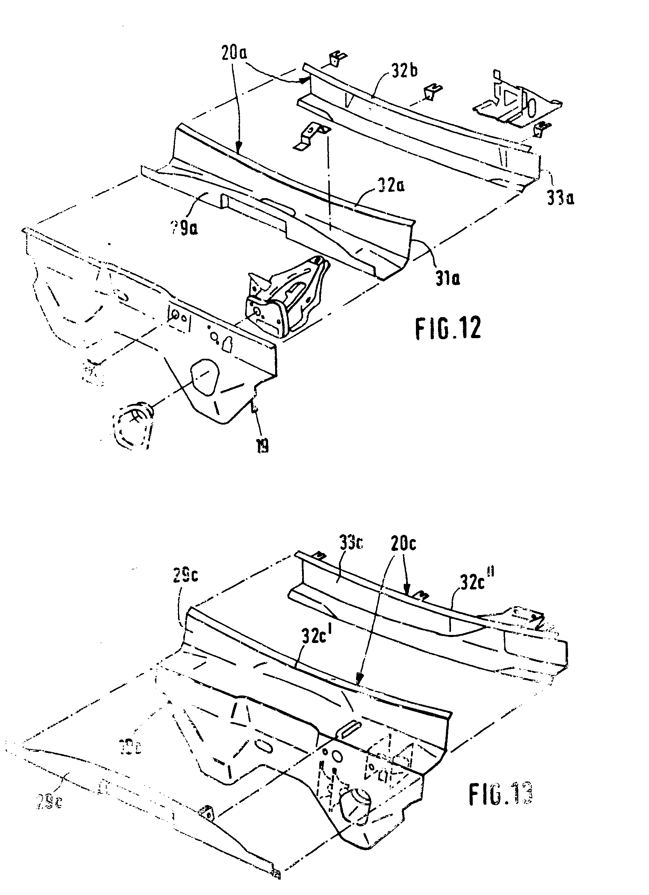

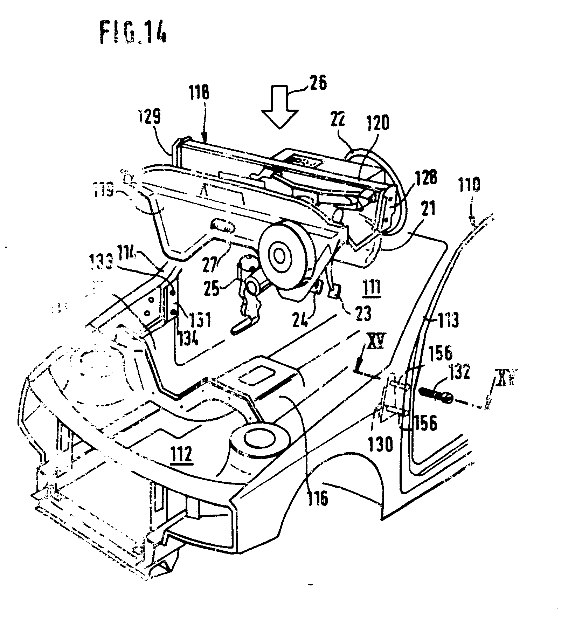

Nähere Einzelheiten über den Aufbau und die Anordnung von Stirnwand 19 und Stirnwandquerträger 20 sind aus Fig. 3 zu entnehmen (vgl. hierzu aber auch Fig. 12 und 13 sowie diesbezügliche Ausführungen weiter unten). Nach Fig. 3 besteht die Stirnwand 19 aus einem Blech, welches mehrfach abgebogen ist. Nach einem etwa vertikalen Verlauf (die eigentliche Karosserie-Stirnwand) ist das Blech 19 etwa rechtwinklig nach rückwärts und anschliessend wieder nach oben abgebogen und bildet dort – zusammen mit einem bei 28 angeschweissten weiteren Blechteil 29 den sog. Wasserkasten 30. Der an den Seiten im Querschnitt etwa ein umgekehrtes U bildende, im mittleren Abschnitt kastenförmig ausgebildete und insgesamt mit 20 bezifferte Stirnwandquerträger wird – wie Fig. 3 ebenfalls zeigt – teilweise auch aus dem Stirnwandblech 19 gebildet. Und zwar ist der eine U-Schenkel des Stirnwandquerträgers 20 das bereits erwähnte obere Ende 31 des Stirnwandbleches 19, mit dem – bei 32 – ein den anderen U-Schenkel des Stirnwandquerträgers 20 bildendes separates Blechteil 33 verschweisst ist. Wie weiterhin aus der Zeichnung, insbesondere Fig. 2–6 hervorgeht, ist der Stirnwandquerträger 20 in seiner Montage-Endstellung beidseitig mit der Karosserie 10 verschraubbar. Hierfür weisen die beiden A-Säulen 13, 14 der Karosserie 10 jeweils einen insgesamt mit 34 bezeichneten Trägeranschluss auf. Wie insbesondere aus Fig. 2–5 erkennbar ist, sind die Trägeranschlüsse 34 jeweils aus der zugeordneten A-Säule (13 bzw. 14) einerseits und dem Radeinbau 17 (vgl. Fig. 1) andererseits herausgeformt. Der der A-Säule 13 zugeordnete Teil des Trägeranschlusses 34 ist in Fig. 4 mit 35 bezeichnet, wohingegen der dem Radeinbau 17 zugeordnete Teil des Trägeranschlusses 34 dort mit 36 beziffert ist. Zur weiteren Veranschaulichung der Einbauverhältnisse des Stirnwandquerträgers 20 ist in Fig. 4 noch ein Teil der Frontscheibe (Windschutzscheibe) gezeigt und mit 37 beziffert.

Die Verschraubung des Stirnwandquerträgers 20 mit den Trägeranschlüssen 34 erfolgt – wie insbesondere aus Fig. 6 ersichtlich ist – jeweils mittels zweier Schrauben 38, 39, die zwei hierfür vorgesehene Schraubendurchführungen 40, 41 bzw. 42, 43 an dem jeweiligen Trägeranschluss 34 bzw. am jeweils zugeordneten Ende des Stirnwandquerträgers 20 durchsetzen. Fig. 6 macht hierbei deutlich, dass die Schrauben 38, 39 an ihren Köpfen konische Anschrägungen 44 besitzen, die mit entsprechend konischen Vertiefungen 45 in den Trägeranschlüssen 34 zusammenwirken, derart, dass beim Anziehen der Schrauben 38, 39 ein sog. Konusdurchzug des die Schrägflächen 44 umgebenden Bereichs des Stirnwandquerträgerbleches 31 erfolgt. An den Enden der Schrauben 38, 39 erfolgt ebenfalls ein entsprechender Konusdurchzug der die Schrauben 38, 39 umgebenden Bereiche des Bleches 33 des Stirnwandquerträgers 20. Dort sind die mit 46 bezifferten Schraubenmuttern, welche durch ein Sicherungsblech 47 an dem Stirnwandquerträger 20 gehalten werden, ebenfalls mit konischen Schrägflächen – hier mit 48 bezeichnet – versehen. Durch den aus Fig. 6 ersichtlichen und im vorstehenden beschriebenen Konusdurchzug ist eine besonders feste Verbindung zwischen Stirnwandquerträger 20 und Trägeranschluss 34, ohne Verschiebung der Teile gegeneinander, gewährleistet.

Fig. 4 und 5 lassen desweiteren erkennen, dass die Trägeranschlüsse 34 jeweils mit einem Scheibenflansch 49 versehen sind, der zur Halterung von geklebten Frontscheiben oder zur Halterung eines Scheibenfassungsgummis dient. Auch der Stirnwandquerträger 20 ist an seinem oberen Rand zugleich als Scheibenflansch ausgebildet (Bezugszeichen 32), und zwar derart, dass sich die Scheibenflansche 49 der Trägeranschlüsse 34 und der Scheibenflansch 32 des Stirnwandquerträgers 20 in Montagestellung zum Gesamt-Scheibenflansch ergänzen. Hierbei weisen die den Trägeranschlüssen 34 zugeordneten Scheibenflanschteile 49 beidseitig jeweils eine abgesetzte Verlängerung auf (vgl. insbesondere Fig. 4), die zur Befestigung des am Stirnwandquerträger 20 ausgebildeten Scheibenflanschteils 32 in der Weise dient, dass die Oberflächen der Scheibenflanschteile 49, 32 in montierter Stellung bündig verlaufen. Gleichzeitig dienen hierbei die abgesetzten Verlängerungen der Scheibenflanschteile 49 zur Festlegung der Montagestellung der Baueinheit 18 in Vertikalrichtung.

Aus Fig. 2 und 3 (vgl. aber auch Fig. 6) geht weiterhin hervor, dass die bei der Montage der Baueinheit 18 miteinander kooperierenden Flächen (z.B. 50, 51 in Fig. 2) der Trägeranschlüsse 34 und des Stirnwandquerträgers 20 jeweils konisch ausgebildet sind und zur selbsttätigen Zentrierung hinsichtlich Einbaustellung der Baueinheit 18 in der Horizontalebene dienen. Durch die Schrägflächen 50, 51 erfolgt hierbei auch zugleich die Festlegung der Baueinheit 18 quer zur Fahrzeuglängsrichtung.

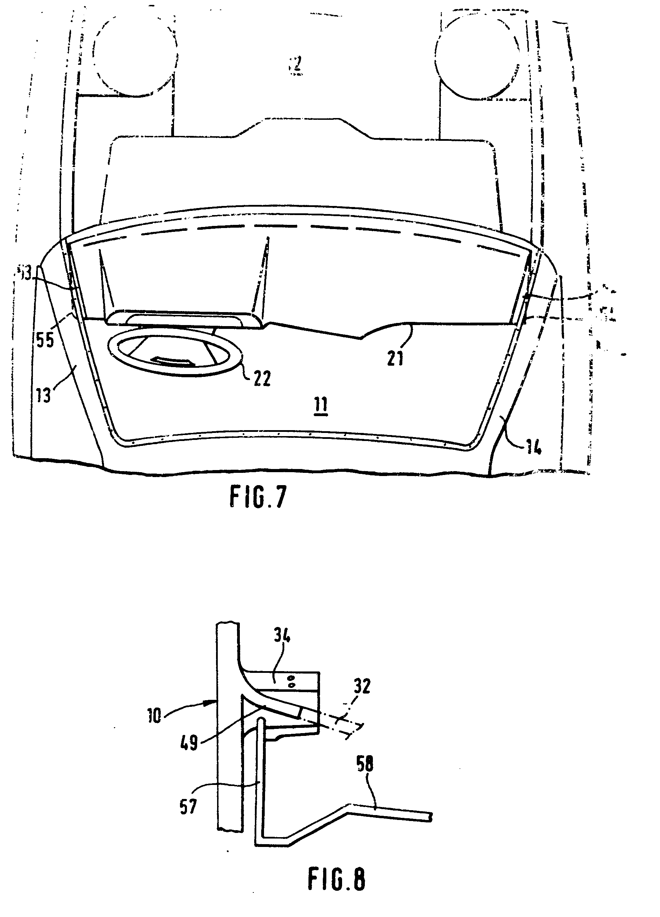

Aus Fig. 7 ist erkennbar, dass die Armaturentafel 21 beidseitig bei 52, 53 abgeschrägt ausgebildet sein muss, damit ihre Konturen den entsprechenden Abmessungen der Frontscheibenöffnung 11, die seitlich ebenfalls Schrägflächen aufweist, entspricht. Hierdurch entfallen zunächst an der Armaturentafel 21 die in Fig. 7 strichliert angedeuteten dreieckförmigen Seitenabschnitte 54, 55. In Einbaustellung der Armaturentafel 21 werden jedoch diese fehlenden Seitenteile 54, 55 durch die Innenverkleidungen der jeweils zugeordneten A-Säule 13 bzw. 14 ergänzt.

Betrachtet man noch einmal die Darstellung nach Fig. 1, so erkennt man, dass die gesamte Stirnwand 19 einen in Horizontalrichtung abgebogenen flanschartigen Rand 56 besitzt, mittels dessen sie an einem entsprechend ausgebildeten Rand 57 an den angrenzenden Karosseriewänden 15 dichtend zu befestigen ist. Es wird diesbezüglich auch auf die Darstellung nach Fig. 8 verwiesen. Aus Fig. 1 und 8 ist desweiteren erkennbar, dass die kooperierenden Ränder 56, 57 von Stirnwand 19 und angrenzenden Karosseriewänden 15, 17 – vom Scheibenflansch 32, 49 ausgehend, über Radeinbau 17 und Unterbau 15 umlaufend – einen mit aushärtendem Dichtmittel füllbaren Dichtungskanal 58 bilden, und unterhalb des Dichtungskanals 58 miteinander verbindbar sind.

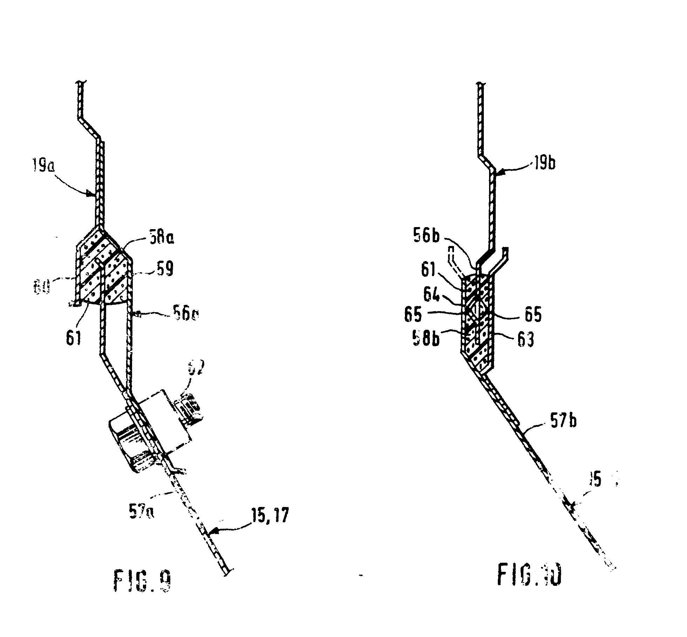

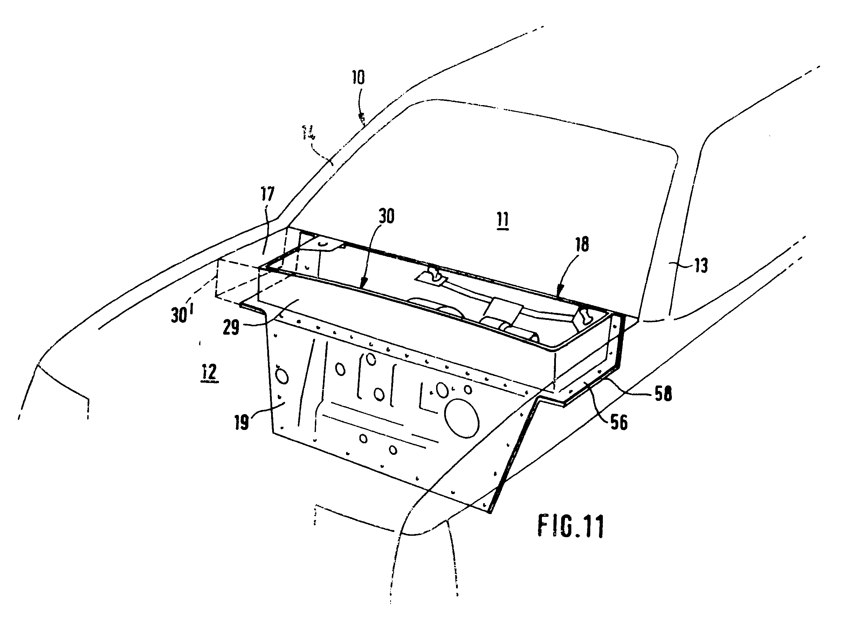

Zwei mögliche Ausführungsformen für die Ausbildung des Dichtungskanals 58 im einzelnen sind aus Fig. 9 und 10 erkennbar. Bei der Ausführungsform nach Fig. 9 ist der Dichtungskanal mit 58 a beziffert. Die Stirnwand 19a ist an ihrem Rand 56a doppelwandig ausgebildet, wobei die beiden mit 59, 60 bezeichneten Wandteile den Dichtungskanal 58a bilden. In den Dichtungskanal 58a ragt von unten der mit 57a bezeichnete Rand des Karosserieunterbaues 15, 17 hinein. Das in den Dichtungskanal 58a eingefüllte Klebemittel 61 kann ein Polyurethan-Kleber sein, der auch zur Einklebung der Frontscheibe 37 verwendet werden kann. Die feste Verbindung der Ränder 56a und 57a der Stirnwand 19a einerseits und des Fahrzeugunterbaus 15, 17 andererseits erfolgt schliesslich durch Schrauben, von denen in Fig. 9 eine gezeigt und mit 62 beziffert ist.

Bei der Variante nach Fig. 10 ist dagegen der zur Verbindung mit dem Rand 56b der Stirnwand 19b vorgesehene Karosserierand 57b doppelwandig ausgebildet, wobei er zwei Wandteile 63, 64 aufweist, die zwischen sich den Dichtungskanal 58b einschliessen. In den Dichtungskanal 58b ragt der Rand 56b der Stirnwand 19b in Einbaulage von oben hinein. Der Dichtungskanal 58b ist mit aushärtbarem Klebemittel 61, z.B. einem Polyurethan-Kleber, gefüllt. Der als Klebeflansch dienende, in das aushärtbare Klebemittel 61 hineinragende Rand 56b der Stirnwand 19b ist mit eingeprägten Distanzwarzen 65 versehen. Hierdurch wird die beiderseitige Verklebung der flanschartigen Ränder 56b und 57b besonders gut gewährleistet. Eine Schraubverbindung der beiden Ränder 56b und 57b ist bei dieser Ausführungsform nicht vorgesehen und auch nicht erforderlich.

In der perspektivischen Darstellung nach Fig. 11 ist die Baueinheit 18 in montierter Lage innerhalb der Karosserie gezeigt. In Fig. 11 sind ausserdem zwei mögliche Varianten für die Ausbildung des Wasserkastens 30 gezeigt. So kann der Wasserkasten 30 einmal – wie in ausgezogenen Linien dargestellt – beidseitig im Abstand zu der Karosserie-Seitenwand 17 abgeschlossen sein. Es ist aber auch möglich, den Wasserkasten 30, wie in Fig. 11 in gestrichelten Linien 30' angedeutet, bis an die jeweils benachbarte Seitenwand 17 unmittelbar heranzuführen. Dies gilt selbstverständlich nicht nur für die rechte Fahrzeugseite (wie in Fig. 11 angedeutet), sondern auch für die linke Fahrzeugseite, wo diese Variante nicht noch einmal extra eingezeichnet ist.

Zwei mögliche Ausführungsformen der Stirnwand 19, einschliesslich Stirnwandquerträger 20, zeigen schliesslich die Fig. 12 und 13. Fig. 12 veranschaulicht hier die eher konventionelle Ausführung der Stirnwand 19 und des Stirnwandquerträgers 20 aus mehreren Blechteilen, die – wie etwa aus Fig. 3 ersichtlich – zusammengesetzt werden können. Bei der Ausführungsform nach Fig. 12 weichen indessen die einzelnen Blechteile in ihrer Gestaltung etwas von der Ausführungsform nach Fig. 3 ab. So sind z.B. die den Wasserkasten 30 bildenden Blechteile 29a und 31a in Fig. 12 einteilig ausgebildet, wohingegen der Wasserkasten 30 bei der Ausführungsform nach Fig. 3 aus zwei bei 28 miteinander verschweissten Blechen 29, 31 besteht. Der Stirnwandquerträger setzt sich auch bei der Ausführungsform nach Fig. 12 aus zwei Blechteilen – mit 31a und 33a bezeichnet – zusammen, die an ihren oberen Rändern 32a bzw. 32b miteinander verbunden werden können.

Die Ausführungsform nach Fig. 13 weicht hiervon wesentlich ab. Die Besonderheit besteht hierbei insbesondere darin, dass die die Stirnwand 19c und den Stirnwandquerträger 20c bildenden Teile sämtlich aus Plastikmaterial bestehen. Hierdurch reduziert sich vorteilhaft die Gesamtzahl der miteinander zu dem Bauelement Stirnwand/Stirnwandquerträger zu verbindenden Einzelteile auf nur drei. Der Wasserkasten wird hierbei, ähnlich wie bei der Ausführungsform nach Fig. 3, durch das mehrfach abgeknickte Stirnwandteil 19c, mit seinem Endteil 29c gebildet, an dem ein separates Wandteil 29c befestigt wird. Der Stirnwandquerträger 20c setzt sich, ebenso wie bei der Ausführungsform nach Fig. 3, aus den Teilen 29c und 33c zusammen, die an den oberen Rändern 32c' und 32c'' miteinander verbunden, vorzugsweise verschweisst werden.

An dieser Stelle sei noch einmal erwähnt, dass bei der Montage der Baueinheit 18 diese in Richtung von oben nach unten (Pfeil 26 in Fig. 1, 2 und 3) durch die freie Frontscheibenöffnung 11 und den nach oben ebenfalls offenen Motorraum 12 in die Karosserie eingefahren wird und anschliessend – wie oben ausführlich beschrieben – mit den entsprechenden Anschlussteilen der Karosserie verbunden wird. Anschliessend können dann Frontscheibe 37 und Motorhaube (nicht gezeigt) montiert werden.

Bei der gegenüber der Ausführungsform nach Fig. 1 abgewandelten Variante nach Fig. 14 ist eine für die Frontscheibe (Windschutzscheibe) vorgesehene Öffnung der Karosserie 110 mit 111 beziffert. Der nach oben hin offene Motorraum trägt insgesamt das Bezugszeichen 112. Die den seitlichen Abschluss der Frontscheibenöffnung 111 bildenden sog. A-Säulen sind mit 113 und 114 bezeichnet. Innerhalb der Karosserie 110 ist u.a. ferner erkennbar der Unterbau 115 mit Getriebetunnel 116, einschliesslich den sog. Radeinbau bildenden Seitenwänden 117.

Etwas oberhalb der Karosserie 110 schwebend (die Tragvorrichtung ist nicht gezeigt) ist in Fig. 14 die hier insgesamt mit 118 bezeichnete vormontierte Baueinheit dargestellt. Es handelt sich hierbei – ebenso wie bei der Ausführungsform nach Fig. 1 – um den Cockpit-Bereich des Fahrzeugs, auch als Cockpit-Modul bezeichnet. Ein wesentlicher Bestandteil der Baueinheit 118 ist eine Karosseriestirnwand 119 mit sich oben anschliessendem Stirnwandquerträger 120.

Weitere, mit der Ausführungsform nach Fig. 1 übereinstimmende Teile tragen der Einfachheit halber die dort verwendeten Bezugszeichen, so dass in dieser Hinsicht auf die obigen Ausführungen zu Fig. 1 verwiesen werden kann.

Der Einbau der in Fig. 14 noch oberhalb ihrer eigentlichen Endmontagestellung gezeigten vormontierten Baueinheit 118 erfolgt wiederum von oben nach unten (Pfeilrichtung 26), also durch die Öffnungen 111 von Frontscheibe und Motorraum 112.

Wie weiterhin aus Fig. 14 erkennbar ist, ist an dem Stirnwandquerträger 120 – an seinen beiden an die seitlichen Karosseriewände (A-Säulen 113, 114) angrenzenden Enden – je eine Schliessplatte 128 bzw. 129 befestigt. Im eingebauten Zustand der Baueinheit 118 kommen die Schliessplatten 128, 129 mit den innen liegenden Blechen (seitl. Stirnwände) 130 bzw. 131 der jeweiligen A-Säule 113 bzw. 114 zur Anlage. Die Befestigung der Baueinheit 118 in ihrer Montagestellung erfolgt durch Verschraubung mittels in Fahrzeugquerrichtung gerichteter Befestigungsschrauben, von denen in Fig. 14 eine in Separatstellung dargestellt und mit 132 beziffert ist. Die innen liegenden Bleche 130, 131 der A-Säulen 113, 114 weisen zu diesem Zweck jeweils zwei etwa vertikal übereinander liegende Durchtrittsbohrungen 133, 134 für die Befestigungsschrauben 132 auf.

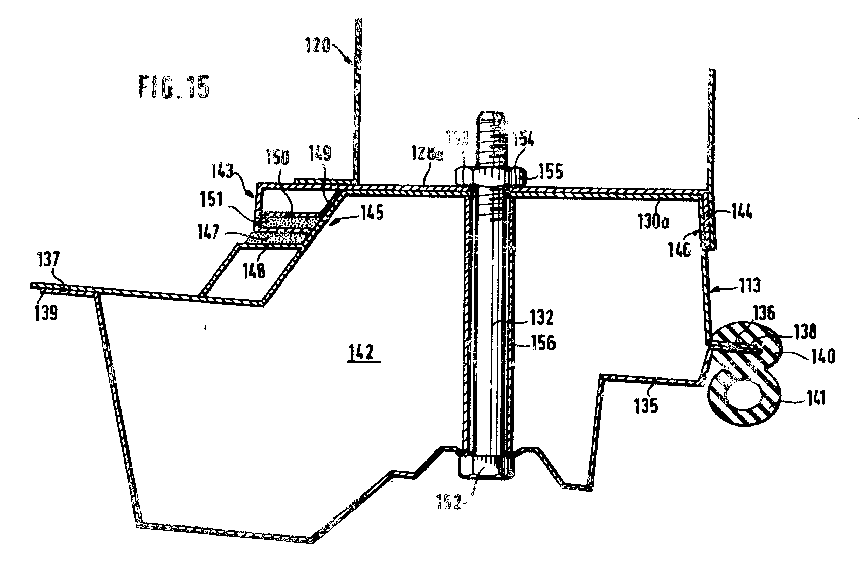

Fig. 15 illustriert nun – in gegenüber Fig. 14 vergrösserter Darstellung – eine mögliche Ausführungsform der hier mit 128a bezeichneten Schliessplatte. Ausserdem zeigt Fig. 15 eine mögliche Variante einer Befestigung der Schliessplatte 128a an dem zugeordneten innen liegenden Blech 130a der linken A-Säule 113. Fig. 15 lässt hierbei erkennen, dass die A-Säule 113 – wie üblich – aus dem bereits erwähnten innen liegenden Blech 130a und einer mit 135 bezifferten Aussenwand besteht. Die beiden die A-Säule 113 bildenden Blechteile 130a und 135 sind bei 136 und 137 miteinander punktverschweisst. Sie bilden hierbei Flansche 138, 139. Auf den Flansch 138 ist eine Flanschabdeckung 140 aufgeschoben, an dem eine im Schnitt ringförmige vordere Türabdichtung 141 angeformt ist. Ein sich im Innern der A-Säule 113 bildender Hohlraum ist mit 142 bezeichnet.

Wie desweiteren aus Fig. 14 und insbesondere auch aus Fig. 15 ersichtlich ist, sind die Schliessplatten 128 (128a) und 129 in ihren Konturen auf die Formgebung der jeweils angrenzenden A-Säulen 113 bzw. 114 so abgestimmt, dass beim Einbau der Baueinheit 118 eine selbsttätige Zentrierung derselben gegenüber der Karosserie 110 erfolgt. Wie Fig. 15 verdeutlicht, weisen die Schliessplatten (in diesem Fall die Schliessplatte 128a) an ihrem vorderen und hinteren Ende jeweils einen nach aussen abgebogenen Fortsatz 143 bzw. 144 auf. Die Fortsätze 143, 144 umgreifen jeweils teilweise eine vordere und eine hintere Führungsschulter – 145 bzw. 146 – der A-Säule 113. Wie in Fig. 14 angedeutet ist, sind die innen liegenden Bleche 130, 131 der A-Säulen 113, 114 in Richtung von oben nach unten leicht konvergierend konisch ausgebildet. Der Neigungswinkel der Schliessplatten 128 (bzw. 128a) und 129 entspricht der vorstehend erwähnten geneigten Stellung der zugeordneten innen liegenden Bleche 130, 131 der betreffenden A-Säulen 113 bzw. 114. Hierdurch wird beim Einbau der Baueinheit 118 eine selbsttätige Zentrierung derselben mit Bezug auf die Längsmittelachse der Karosserie 110 erreicht.

Darüber hinaus ist auch noch die vordere und hintere Führungsschulter – in Fig. 15 mit 145 bzw. 146 beziffert – der jeweiligen A-Säule 113 bzw. 114 in Richtung von oben nach unten zueinander divergierend angeordnet. Im Zusammenwirken mit der jeweils zugeordneten Schliessplatte (z.B. 128a in Fig. 15) ergibt sich hierdurch eine selbsttätige Zentrierung der Baueinheit 118 bei deren Einbau in der Karosserie 110 auch in Fahrzeuglängsrichtung.

Die in Fig. 15 dargestellte Ausführungsform zeichnet sich desweiteren dadurch aus, dass der mit der vorderen Führungsschulter 145 der A-Säule 113 zusammenwirkende Schliessplatten-Fortsatz 143 um insgesamt etwa 180° nach rückwärts abgebogen ist und dichtend in einen an der Vorderseite der vorderen Führungsschulter 145 ausgebildeten Kanal 147 eingreift. Der nach vorn hin offene Kanal 147 ist zwischen einer Abkröpfung 148 der vorderen A-Säulen-Führungsschulter 145 und einem mit der Führungsschulter 145 bei 149 punktverschweissten entsprechend abgebogenem Blechteil 150 ausgebildet. Fig. 15 lässt weiterhin erkennen, dass der Kanal 147 mit einem aushärtbaren Klebemittel 151 gefüllt ist und somit als Dichtungskanal für eine dichtende Verbindung zwischen den Teilen 128a und 130a bzw. 113 fungiert.

Zugleich wird durch das beschriebene Zusammenwirken der Teile 143, 145 und 147–151 vorteilhafterweise eine gewisse Verhakung des Stirnwandquerträgers 120 mit der jeweils zugeordneten A-Säule (z.B. 113 in Fig. 15) erreicht, die sich insbesondere bei einem evtl. Aufprallunfall des Fahrzeuges hinsichtlich hoher Festigkeit der Verbindung zwischen der Baueinheit 118 und der Fahrzeugkarosserie 110 günstig auswirkt.

Eine Möglichkeit, wie die Verbindung zwischen dem Stirnwandquerträger 120 und den A-Säulen 113 und 114 im einzelnen gestaltet werden kann, zeigt ebenfalls Fig. 15. Bei der Ausführungsform nach Fig. 15 ist erkennbar, dass die zur Verschraubung der Schliessplatte 128a dienende Befestigungsschraube 132 die A-Säule 113 von aussen nach innen vollständig durchsetzt und sich mit ihrem Kopf 152 an der Aussenwand 135 der A-Säule 113 abstützt. An der Innenseite der Schliessplatte 128a – und bei 153, 154 mit dieser verschweisst – ist eine Schraubenmutter 155 angeordnet, die mit der Befestigungsschraube 132 zusammenwirkt. Die beim Anziehen der Schraube 152 auftretenden Kräfte würden naturgemäss ein unerwünschtes Aufeinanderzubewegen der Wände 130a und 135 der A-Säule 113 bewirken. Um einer derartigen Verformung der A-Säule 113 entgegenzuwirken, ist innerhalb des Hohlraumes 142 der A-Säule 113 – von der Innenwand 130a zur Aussenwand 135 reichend – eine Abstandshülse 156 angeordnet, welche die Befestigungsschraube 132 innerhalb des Hohlraumes 142 konzentrisch umschliesst. Selbstverständlich sind entsprechend konstruktive Massnahmen auch bei den übrigen, in Fig. 15 nicht gezeigten Befestigungsschrauben vorgesehen. Es handelt sich bei der Ausführungsform der Verbindung nach Fig. 15 um eine sog. zweischnittige Verbindung.

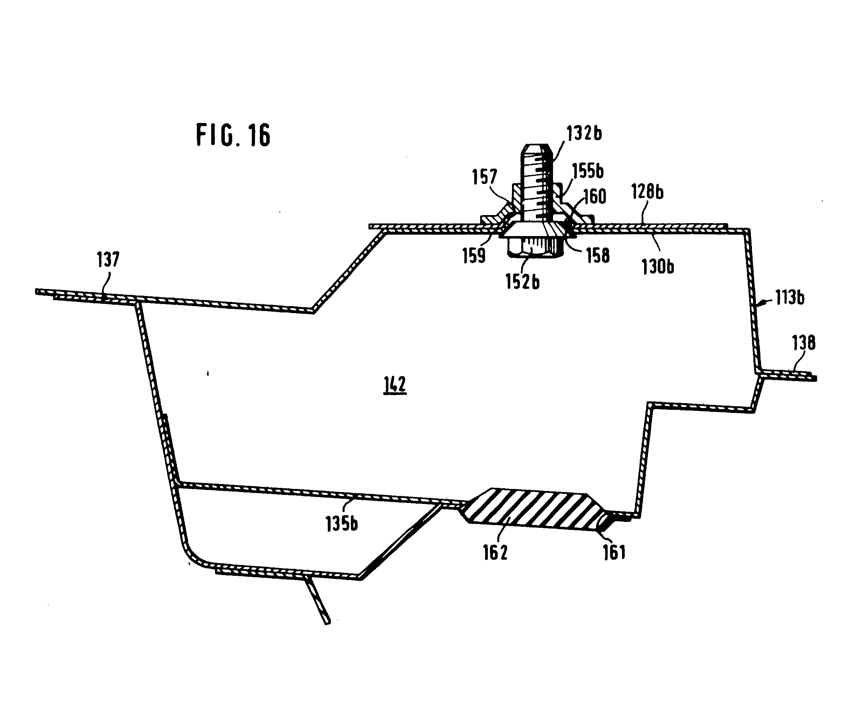

Eine andere Ausführungsform einer Verbindung zwischen dem Stirnwandquerträger 120 und der A-Säule 113 zeigt Fig. 16. Aus Gründen der Übersichtlichkeit und Einfachheit sind in Fig. 16 die der Ausführungsform nach Fig. 15 entsprechenden Teile mit denselben Bezugszeichen versehen. Nach Fig. 16 ist an der Innenseite der Schliessplatte 128b eine Schraubenmutter 155b befestigt, die eine konische Vertiefung 157 aufweist. Das innen liegende Blech 130b der A-Säule 113b und die Schliessplatte 128b bilden eine Ausnehmung 158, die von einer Befestigungsschraube 132b durchsetzt wird. Die mit der

Mutter 155b zusammenwirkende Befestigungsschraube 132b besitzt einen Kopf 152b mit konischer Anschrägung 159. Beim Festziehen der Befestigungsschraube 132b stützt sich der Schraubenkopf 152b an dem innen liegenden Blech 130b der A-Säule 113b ab. Aufgrund der konischen Anschrägung 159 wird hierbei der die Schraube umgebende Bereich der Schliessplatte 128b – wie bei 160 erkennbar – plastisch verformt und in die hohlkegelförmige Vertiefung 157 der Schraubenmutter 155b hineingedrückt. Es entsteht also ein sog. konischer Durchzug, der eine besonders gute Festigkeit zwischen den beiden verbundenen Teilen 128b und 113b und damit der Baueinheit 118 mit der A-Säule 113 gewährleistet.

Um die Befestigungsschrauben 132b in ihre aus Fig. 16 ersichtlichen Montagestellungen im Inneren der A-Säulen (z.B. 113b) bringen zu können, sind in der Aussenwand 135b jeweils Ausnehmungen 161 vorgesehen, die durch einen Stopfen 162, der z.B. aus Gummi oder einem ähnlichen Material bestehen kann, von aussen verschlossen werden können.

Bei der aus Fig. 16 ersichtlichen Variante einer Verbindung der Teile 128b und 113b handelt es sich um eine sog. einschnittige Verschraubung.

**Patentansprüche**

1. Vormontierte Baueinheit (18) für den Spritzwandbereich von Kraftfahrzeugen, insbesondere Personenkraftwagen, die als Ganzes innerhalb der Karosserie (10) des Fahrzeuges montierbar ist und im wesentlichen folgende Aggregate umfasst:

a) eine Armaturentafel (21) einschliesslich aller Einbauten, Sicherungskasten und elektrischer Verkabelung, Heizung, mit Betätigung und Luftverteilungssystem sowie Antenne,

b) eine Lenkung (22) mit Lenkrad, Lenkge-triebe (25), Lenkradverkleidung und Lenkungs-halter,

c) Pedale (23, 24) für Kupplung und Bremse sowie Fahrpedal, jeweils mit Pedalblöcken, sowie

d) Bremskraftverstärker, Scheibenwischeranlage, Heizungsgebläse und Klimaanlage, wobei die Karosserie (10) eine Stirnwand (19) und einen unterhalb der Windschutzscheibe (11) angeordneten Stirnwand-Querträger (20) (sog. Lenkungsquerträger) aufweist und wobei die genannten Aggregate mit der Stirnwand (19) – unmittelbar oder mittelbar – im eingebauten Zustand verbunden sind, und wobei die Stirnwand (19) von der Rohkarosserie (10) getrennt als Montagebasis für die Baueinheit (18) dient und in Einbaulage der Baueinheit (18) mit den seitlich jeweils angrenzenden Karosseriewänden (z.B. 17) dichtend verbindbar ist, dadurch gekennzeichnet, dass auch der Stirnwandquerträger (20) von der Rohkarosserie (10) getrennt zusammen mit der Stirnwand (19) als Montagebasis für die Baueinheit (18) dient, und dass in Einbaulage der Baueinheit (18) auch der Stirnwandquerträger (20) mit den seitlich jeweils angrenzenden Karosseriewänden (13, 14, 17) dichtend verbindbar ist, wobei das die Stirnwand (19) bildende Blech mit dem Stirnwandquerträger (20) oder mit einem einen Teil des Stirnwandquerträgers (20) bildenden Querträgerblech (33) verschweisst ist.

2. Vormontierte Baueinheit nach Anspruch 1, dadurch gekennzeichnet, dass der in den seitlichen Bereichen im Querschnitt etwa U-förmige Stirnwandquerträger (20) hinsichtlich des einen U-Schenkels (31) vom oberen Abschnitt des Stirnwandbleches (19) und hinsichtlich des zweiten U-Schenkels von einem mit dem Stirnwandblech (19) (bei 32) verschweissten Querträgerblech (33) gebildet wird (Fig. 2, 5 und 6).

3. Vormontierte Baueinheit nach Anspruch 1 oder 2, dadurch gekennzeichnet, dass der obere Abschnitt (31) des Stirnwandbleches (19) abgewinkelt ausgebildet ist und – zusammen mit einem mit ihm verschweissten weiteren Blechteil (29) – zugleich den Wasserkasten (30) bildet (Fig. 3 und 11).

4. Vormontierte Baueinheit nach einem oder mehreren der vorstehenden Ansprüche, dadurch gekennzeichnet, dass der Stirnwandquerträger (20) beidseitig (bei 42, 42) mit der Karosserie (10) verschraubbar ist und dass hierfür die linke und die rechte A-Säule (13, 14) der Karosserie jeweils einen Trägeranschluss (34) aufweisen (Fig. 2-6).

5. Vormontierte Baueinheit nach Anspruch 4, dadurch gekennzeichnet, dass der hintere Teil (35) des Trägeranschlusses (34) Bestandteil des Innenbereichs der jeweiligen A-Säule (13 bzw. 14) ist und der vordere Teil (36) (Fig. 4) des Trägeranschlusses durch eine Verlängerung des zu-geordneten seitlichen Radeinbauteiles (17) ge-bildet wird.

6. Vormontierte Baueinheit nach Anspruch 4 oder 5, dadurch gekennzeichnet, dass der Trägeranschluss (34) mit einem Scheibenflansch (49) für geklebte Scheiben (37) oder für den Scheibenfassungsgummi ausgebildet ist (Fig. 4 und 5).

7. Vormontierte Baueinheit nach Anspruch 6, dadurch gekennzeichnet, dass der Stirnwand-querträger (20) an seinem oberen Rand (32) zugleich als Scheibenflansch ausgebildet ist, derart, dass sich der Scheibenflansch (49) der Trägeranschlüsse (34) und der Scheibenflansch (32) des Stirnwandquerträgers (20) in Montagestellung zum Gesamt-Scheibenflansch ergänzen (Fig. 4).

8. Vormontierte Baueinheit nach Anspruch 6 oder 7, dadurch gekennzeichnet, dass die den Trägeranschlüssen (34) zugeordneten Teile (49) des Gesamt-Scheibenflansches (32, 49) beidseitig jeweils eine abgesetzte Verlängerung aufweisen, die zur Befestigung des am Stirnwandquerträger (20) ausgebildeten Scheibenflanschteils (32) und zugleich zur Festlegung der Montagestellung der Baueinheit (18) in Vertikalrichtung dient.

9. Vormontierte Baueinheit nach einem oder mehreren der Ansprüche 4–8, dadurch gekennzeichnet, dass Anschlussflächen (50) der beidseitigen Trägeranschlüsse (34) und mit diesen zusammenwirkende Anschlussflächen (51) des Stirnwandquerträgers (20) jeweils konisch ausgebildet sind und zur selbsttätigen Zentrierung hinsichtlich Einbaustellung der Baueinheit (18) in der Horizontalebene dienen (Fig. 2).

10. Vormontierte Baueinheit nach einem oder mehreren der Ansprüche 4–9, dadurch gekennzeichnet, dass bei der Vornahme der Schraubenverbindung zwischen Stirnwandquerträger (20) und den Trägeranschlüssen (34) konisch angeschrägte Schrauben (38, 39) mit entsprechend konischen Vertiefungen (45) in den Trägeranschlüssen (34) zusammenwirken, derart, dass beim Anziehen der Schrauben ein sogenannter Konusdurchzug (bei 42, 43) des Stirnwandquerträger-Bleches erfolgt (Fig. 6).

11. Vormontierte Baueinheit nach einem oder mehreren der Ansprüche 1–4, dadurch gekennzeichnet, dass an dem Stirnwandquerträger (120) an seinen beiden an die seitlichen Karosseriewände (130, 130a, 130b; 131) angrenzenden Enden je eine Schliessplatte (128, 128a, 128b; 129) befestigt ist und dass die Schliessplatten zusammen mit dem Stirnwandquerträger mit der jeweils zugeordneten A-Säule (113, 113b; 114) durch in Fahrzeugquerrichtung gerichtete Befestigungsschrauben (132, 132b) verschraubbar sind (Fig. 14–16).

12. Vormontierte Baueinheit nach Anspruch 11, dadurch gekennzeichnet, dass die Schliessplatten (128, 128a, 128b; 129) mit dem innen liegenden Blech (seitl. Stirnwand) (130, 130a, 130b; 131) der jeweiligen A-Säule (113, 113b; 114) verschraubbar sind.

13. Vormontierte Baueinheit nach Anspruch 11 oder 12, dadurch gekennzeichnet, dass die Schliessplatten (128, 128a, 128b; 129) in ihren Konturen auf die Formgebung der jeweils angrenzenden Teile (130, 130a, 130b; 131) der A-Säulen (113, 113b; 114) abgestimmt sind, derart, dass beim Einbau der Baueinheit (118) eine selbsttätige Zentrierung derselben gegenüber der Karosserie (110) erfolgt.

14. Vormontierte Baueinheit nach Anspruch 13, dadurch gekennzeichnet, dass die Schliessplatten (128a) an ihrem vorderen und hinteren Ende nach aussen abgebogene Fortsätze (143 bzw. 144) aufweisen, die vordere und hintere Führungsschulter (145 bzw. 146) der A-Säule (113) teilweise umgreifen (Fig. 15).

15. Vormontierte Baueinheit nach Anspruch 12, 13 oder 14, dadurch gekennzeichnet, dass die innen liegenden Bleche (130, 130a, 130b; 131) (seitl. Stirnwände) der A-Säulen (113, 113b; 114) in Richtung von oben nach unten konvergierend konisch ausgebildet und die Schliessplatten (128, 128a, 128b; 129) in dem Neigungswinkel der innen liegenden A-Säulen-Bleche (130, 130a, 130b; 131) entsprechender geneigter Stellung an dem Stirnwandquerträger (120) befestigt sind.

16. Vormontierte Baueinheit nach Anspruch 13, 14 und 15, dadurch gekennzeichnet, dass vordere und hintere Führungsschulter (145 bzw. 146) der jeweiligen A-Säule (z.B. 113) in Richtung von oben nach unten zueinander divergierend angeordnet sind.

17. Vormontierte Baueinheit nach Anspruch 14, 15 oder 16, dadurch gekennzeichnet, dass der mit der vorderen Führungsschulter (145) der A-Säule (z.B. 113) zusammenwirkende Schliessplatten-Fortsatz (143) um insgesamt etwa 180° nach rückwärts abgebogen ist und dichtend in einen an der Vorderseite der vorderen Führungsschulter (145) ausgebildeten, mit aushärtbarem Klebemittel (151) gefüllten Dichtungskanal (14) eingreift (Fig. 15).

18. Vormontierte Baueinheit nach Anspruch 17, dadurch gekennzeichnet, dass der nach vorn hin offene Dichtungskanal (14) zwischen einer Abkröpfung (148) der vorderen A-Säulen-Führungsschulter (145) und einem mit der Führungsschulter (145) punktverschweissten entsprechend abgebogenen Blechteil (150) ausgebildet ist.

19. Vormontierte Baueinheit nach einem oder mehreren der Ansprüche 11–18, dadurch gekennzeichnet, dass die zur Verschraubung der Schliessplatten (128, 128a; 129) dienenden Befestigungsschrauben (132) die jeweilige A-Säule (z.B. 113) von aussen nach innen durchsetzen und sich mit ihrem Kopf (152) an der Aussenwand (135) der betreffenden A-Säule (z.B. 113) abstützen, und dass zwischen der Innenseite der A-Säulen-Aussenwand (135) und der Aussenseite des innen liegenden A-Säulen-Bleches (z.B. 130a) – die betreffende Befestigungsschraube (132) konzentrisch umgebend – jeweils eine Abstandshülse (156) angeordnet ist (Fig. 14 und 15).

20. Vormontierte Baueinheit nach Anspruch 19, dadurch gekennzeichnet, dass die Befestigungsschraube (132, 132b) mit einer sich an der Innenseite der Schliessplatte (128, 128a, 128b; 129) abstützenden, vorzugsweise mit der Schliessplatte verschweissten Mutter (155, 155b) zusammenwirkt.

21. Vormontierte Baueinheit nach einem oder mehreren der Ansprüche 11–18, dadurch gekennzeichnet, dass die zur Verschraubung der Schliessplatten (128b) dienenden Befestigungsschrauben (132b) das innen liegende Blech (130b) der jeweiligen A-Säule (113b) von aussen nach innen durchsetzen und sich mit ihrem Kopf (152b) an der Aussenwand des betreffenden innen liegenden Bleches (130b) abstützen (Fig. 16).

22. Vormontierte Baueinheit nach Anspruch 21, dadurch gekennzeichnet, dass zur Einführung der Befestigungsschrauben (132b) in das Innere der A-Säulen (z.B. 113b) zu Montagezwecken in der Aussenwand (135b) der A-Säulen jeweils eine durch einen elastischen Stopfen (162) oder dergleichen verschliessbare Öffnung (161) vorgesehen ist.

23. Vormontierte Baueinheit nach Anspruch 20, 21 oder 22, dadurch gekennzeichnet, dass bei der Vornahme der Schraubverbindung zwischen Schliessplatte (128b) und A-Säule (113b) eine (bei 159) konisch angeschrägte Befestigungsschraube (132b) mit einer entsprechend konischen Vertiefung (157) in der Mutter (155b) zusammenwirkt, derart, dass beim Anziehen der Befestigungsschraube (132b) ein sog. Konusdurchzug (160) des innen liegenden Bleches (130b) der A-Säule (113b) und der Schliessplatte (128b) erfolgt (Fig. 16).

24. Vormontierte Baueinheit nach einem oder mehreren der vorstehenden Ansprüche, dadurch gekennzeichnet, dass die Armaturentafel (21) seitlich abgeschrägt ausgebildet ist (bei 52, 53) entsprechend den beidseitigen Schrägen der Frontscheibenöffnung (11), in der Draufsicht gesehen, und dass die Armaturentafel (21) in Einbaustellung hinsichtlich ihrer infolge der Schrägung (52, 53) fehlenden Seitenteile (54, 55) durch die Innenverkleidung der jeweils zugeordneten A-Säule und der Türen (13 bzw. 14) ergänzt wird (Fig. 7).

25. Vormontierte Baueinheit nach einem oder mehreren der vorstehenden Ansprüche, dadurch gekennzeichnet, dass die gesamte Stirnwand (19) einen abgebogenen flanschartigen Rand (56) aufweist, mittels dessen sie mit einem entsprechenden Rand (57) an den angrenzenden Karosseriewänden (Radeinbau 17 und Unterbau 15) dichtend verbindbar ist (Fig. 1 und 8–10).

26. Vormontierte Baueinheit nach Anspruch 25, dadurch gekennzeichnet, dass die kooperierenden Ränder (56, 57) von Stirnwand (19) und angrenzenden Karosseriewänden (15, 17) – vom Scheibenflansch (32, 49) ausgehend, über Radeinbau (17) und Unterbau (15) umlaufend – einen mit aushärtendem Dichtmittel (61) füllbaren Dichtungskanal (58) bilden und innerhalb und/oder unterhalb des Dichtungskanals (58) miteinander verbindbar sind (Fig. 9 und 10).

27. Vormontierte Baueinheit nach Anspruch 25, dadurch gekennzeichnet, dass der zur Verbindung mit dem Rand (56b) der Stirnwand (19b) vorgesehene Karosserierand (57b) doppelwandig (63, 64) ausgebildet ist und – vom Scheibenflansch (32, 49) ausgehend, über Radeinbau (17) und Unterbau (15) umlaufend – einen Dichtungskanal (58b) bildet, in den der Rand (56b) der Stirnwand (19b) in Einbaulage der Baueinheit (18) von oben hineinragt, und dass der Dichtungskanal (58b) mit aushärtbarem Klebemittel (61) füllbar ist, derart, dass die beiden kooperierenden Ränder (56b, 57b) miteinander verklebbar sind (Fig. 10).

28. Vormontierte Baueinheit nach Anspruch 27, dadurch gekennzeichnet, dass als Klebemittel (61) ein zugleich zur Einklebung der Scheiben (z.B. 37) verwendbarer Polyurethan-Kleber dient.

29. Vormontierte Baueinheit nach Anspruch 27 oder 28, dadurch gekennzeichnet, dass der als Klebeflansch dienende Rand (56b) der Stirnwand (19b) mit eingeprägten Distanzwarzen (65) versehen ist.

30. Vormontierte Baueinheit nach einem oder mehreren der vorstehenden Ansprüche, dadurch gekennzeichnet, dass Stirnwand (19c) und Stirnwandquerträger (20c) als ein- oder mehrteiliges Plastikelement oder aus Leichtbaublechen bzw. Verbundmaterialien ausgebildet sind (Fig. 13).

31. Verfahren zum Einbau einer vormontierten Baueinheit nach einem oder mehreren der vorstehenden Ansprüche, dadurch gekennzeichnet, dass die vormontierte Baueinheit (18) von oben nach unten durch die Windschutzscheibenöffnung (11) der Karosserie (10) eingefahren und anschliessend an Stirnwand (19) und Stirnwandquerträger (20) mit den angrenzenden Karosseriewänden (15, 17) dichtend verbunden wird.

32. Verfahren nach Anspruch 31, dadurch gekennzeichnet, dass Windschutzscheibe (37) und Motorhaube erst nach Einbau der vormontierten Baueinheit (18) montiert werden.

33. Verfahren nach Anspruch 32, dadurch gekennzeichnet, dass die Motorhaube vorn oder seitlich scharnierend befestigt wird.

34. Verfahren nach Anspruch 31, dadurch gekennzeichnet, dass die Windschutzscheibe zusammen mit dem Cockpit oder als vormontierte Baueinheit eingefahren wird.

**Revendications**

1. Unité préassemblée (18) pour la région du tablier de véhicules automobiles, notamment de véhicules de tourisme, pouvant être montée en tant qu'ensemble à l'intérieur de la carrosserie (10) du véhicule et comportant, pour l'essentiel, les ensembles suivants:

a) un tableau de bord (21) comprenant tous les organes installés, boîtes à fusibles et câblage électrique, chauffage avec organes d'actionnement et système de distribution d'air, antenne,

b) une direction (22) avec volant de direction, mécanisme de direction (25), habillage du volant et support de direction,

c) des pédales (23, 24) pour embrayage et frein, et pédale d'accélérateur, à chaque fois avec supports de pédale, et

d) amplificateur de force de freinage, installation d'essuie-glace, ventilateur de chauffage et installation de climatisation, la carrosserie (10) présentant un tablier (19) et une traverse da tablier (20) (dite traverse de direction) agencée en dessous du pare-brise (11), les ensembles mentionnés étant, lorsqu'ils sont en condition montée, directement ou indirectement assemblés au tablier (19), lequel, séparé de la caisse (10), sert de base de montage pour l'unité (18) et, lorsque celle-ci est en position montée, peut être assemblé de manière étanche aux parois de carrosserie (par exemple 17) latéralement adjacentes, caractérisée par le fait que la traverse de tablier (20), séparée de la caisse (10), sert elle aussi, conjointement avec le tablier (19), de base de montage pour l'unité (18), et par le fait que, lorsque l'unité (18) est en position montée, la traverse de tablier (20) est, elle aussi, apte à être assemblée de façon étanche aux parois (13, 14, 17) latéralement adjacentes de la carrosserie, la tôle formant le tablier (19) étant soudée à la traverse de tablier (20) ou à une tôle de traverse (33) formant une partie de la traverse de tablier (20).

2. Unité préassemblée selon revendication 1, caractérisée par le fait que la traverse de tablier (20) ayant, dans les régions latérales, une section droite sensiblement en forme de U, est formée, pour ce qui est de la première branche (31) de ce U, par la portion supérieure de la tôle de tablier (19) et, pour ce qui est de la seconde branche du U, par une tôle de traverse (33) soudée (en 32) à la tôle de tablier (19) (figures 2, 5 et 6).

3. Unité préassemblée selon revendication 1 ou 2, caractérisée par le fait que la portion supérieure (31) de la tôle de tablier (19) est coudée et forme en même temps, conjointement avec une autre pièce de tôle (29) qui lui est soudée, le bac de récupération d'eau (30) (figures 3 et 11).

4. Unité préassemblée selon l'une quelconque des revendications précédentes, caractérisée par le fait que la traverse de tablier (20) est apte à être boulonnée, des deux côtés (en 42, 43), à la carrosserie (10), et par le fait qu'à cet effet les montants avant (13, 14) de la carrosserie situés à gauche et à droite présentent chacun un organe (34) de raccordement à la traverse (figures 2 à 6).

5. Unité préassemblée selon revendication 4, caractérisée par le fait que la partie arrière (35) de l'organe (34) de raccordement à la travrse fait partie intégrante de la zone intérieure du montant avant concernée (13, 14), et la partie avant (36) (figure 4) de l'organe de raccordement à la traverse est formée par un prolongement de la partie latérale correspondante (17) de montage de roue.

6. Unité préassemblée selon revendication 4 ou 5, caractérisée par le fait que l'organe de raccordement à la traverse (34) est doté d'un rebord (49) pour montage de pare-brise collé (37) ou de joint de montage de pare-brise (figures 4 et 5).

7. Unité préassemblée selon revendication 6, caractérisée par le fait que la traverse de tablier (20) possède un bord supérieur (32) qui est en même temps aménagé en tant que rebord pour montage de pare-brise, de manière que le rebord (49) pour montage de pare-brise de l'organe (34) de raccordement à la traverse et le rebord (32) pour montage de pare-brise de la traverse de tablier (20) se complètent, en position de montage, pour constituer la feuillure de pare-brise (figure 4).

8. Unité préassemblée selon revendication 6 ou 7, caractérisée par le fait que les parties (49) de la feuillure de pare-brise (32, 49) associées aux organes (34) de raccordement à la traverse présentent chacune, des deux côtés, un prolongement décalé servant à la fois à fixer la partie rebord (32) pour montage de pare-brise aménagée sur la traverse de tablier (20) et à imposer la position de montage de l'unité modulaire (18) dans la direction verticale.

9. Unité préassemblée selon l'une quelconque des revendications 4 à 8, caractérisée par le fait que des surfaces de raccordement (50) des organes (34) de raccordement à la traverse situés des deux côtés, et des surfaces de raccordement (51) de la traverse de tablier (20) coopérant avec ceux-ci sont de forme conique et servent à l'auto-centrage de l'unité (18) dans le plan horizontal, à sa position de montage (figure 2).

10. Unité préassemblée selon une ou plusieurs des revendications 4 à 9, caractérisée par le fait que, lors de l'exécution de l'assemblage boulonné entre traverse de tablier (20) et organes de raccordement à la traverse, des vis (38, 39) dotées de parties coniques coopèrent avec des dépressions coniques correspondantes (45) dans les organes de raccordement (34), de manière que, lors du serrage de ces vis, il se forme un soyage conique (en 42, 43) de la tôle de traverse de tablier (figure 6).

11. Unité préassemblée selon une ou plusieurs des revendications 1 à 4, caractérisée par le fait qu'une plaque de fermeture (128, 128a, 128b; 129) est fixée à chacune des extrémités de la traverse de tablier (120) qui sont adjacentes aux parois latérales (130, 130a, 130b, 131) de la carrosserie, et par le fait que chacune de ces plaques de fermeture peut être assemblée, conjointement avec la traverse de tablier, au montant avant correspondant (113, 113b; 114), au moyen de vis de fixation (132, 132b) dirigées transversalement au véhicule (figures 14 à 16).

12. Unité préassemblée selon revendication 11, caractérisée par le fait que chaque plaque de fermeture (128, 128a, 128b; 129) peut être boulonnée à la tôle intérieure (paroi latérale) (130, 130a, 130b; 131) du montant concerné (113, 113b; 114).

13. Unité préassemblée selon revendication 11 ou 12, caractérisée par le fait que les plaques de fermeture (128, 128a, 128b; 129) ont des contours adaptés à la configuration des parties (130, 130a, 130b; 131) adjacentes des montants (113, 113b; 114) de manière à réaliser un auto-centrage de l'unité (118) par rapport à la carrosserie (110), lors du montage.

14. Unité préassemblée selon revendication 13, caractérisée par le fait que les plaques de fermeture (128a) présentent, à leurs extrémités avant et arrière, des prolongements (143, 144) pliés vers l'extérieur, lesquels recouvrent partiellement des épaulements de guidage avant et arrière (145, 146) du montant avant (113) (figure 15).

15. Unité préassemblée selon revendication 12, 13 ou 14, caractérisée par le fait que les tôles intérieures (130, 130a, 130b; 131) (parois latérales) des montants avant (113, 113b; 114) sont façonnées en cône convergeant de bas en haut, et les plaques de fermeture (128, 128a, 128b; 129) sont fixées à la traverse de tablier (120) dans une position inclinée correspondant à l'angle de pente des tôles intérieures (130, 130a, 130b; 131) des montants avant.

16. Unité préassemblée selon revendication 13, 14 et 15, caractérisée par le fait que les épaulements de guidage avant et arrière (145, 146) de chaque montant avant (par exemple 113) sont agencés de manière à être mutuellement divergents du haut vers le bas.

17. Unité préassemblée selon revendication 14, 15 ou 16, caractérisée par le fait que le prolongement (143) de plaque de fermeture coopérant avec l'épaulement de guidage avant (145) de montant avant (par exemple 113) est rabattu vers l'arrière, globalement d'environ 180°, et s'engage de manière étanche dans un canal d'étanchéité (147) aménagé sur le côté avant de l'épaulement de guidage avant (145) et rempli d'adhésif durcissable (151) (figure 15).

18. Unité préassemblée selon revendication 17, caractérisée par le fait que le canal d'étanchéité (147), ouvert vers l'avant, est aménagé entre un coude (148) de l'épaulement de guidage avant (145) du montant avant et une pièce en tôle (150) pliée de manière correspondante et soudée par points à cet épaulement de guidage (145).

19. Unité préassemblée selon l'une quelconque des revendications 11 à 18, caractérisée par le fait que les vis de fixation (132) servant au boulonnage des plaques de fermeture (128, 128a, 129) traversent le montant avant (par exemple 113) concerné, de l'extérieur vers l'intérieur, et prennent appui par leur tête (152) sur la paroi extérieure (135) du montant avant (par exemple 113), et par le fait qu'il y a, entre le côté intérieur de la paroi extérieure (135) du montant avant et le côté extérieur de la tôle intérieure (par exemple 130a) du montant avant, un manchon d'écartement (156) entourant concentriquement la vis de fixation concernée (132) (figures 14 et 15).

20. Unité préassemblée selon revendication 19, caractérisée par le fait que la vis de fixation (132, 132b) coopère avec un écrou (155, 155b) prenant appui contre le côté intérieur de la plaque de fermeture (128, 128a, 128b; 129) de préférence soudé à celle-ci.

21. Unité préassemblée selon l'une quelconque des revendications 11 à 18, caractérisée par le fait que les vis de fixation (132b) servant au boulonnage des plaques de fermeture (128b) traversent la tôle intérieure (130b) du montant avant (113b) concerné, cela de l'extérieur vers l'intérieur, et prennent appui par leur tête (152b) contre la paroi extérieure de la tôle intérieure concernée (130b) (figure 16).

22. Unité préassemblée selon revendication 21, caractérisée par le fait que, pour permettre le montage, une ouverture (161) obturable par un bouchon élastique (162) ou analogue est prévue à chaque fois dans la paroi extérieure (135b) des montants avant, pour permettre d'introduire les vis de fixation (132b) dans l'espace intérieur desdits montants avant (par exemple 113b).

23. Unité préassemblée selon l'une quelconque des revendications 20, 21 ou 22, caractérisée par le fait que, lors de l'exécution de l'assemblage boulonné entre plaque de fermeture (128b) et montant avant (113b), une vis de fixation (132b) comportant une partie conique (en 159) coopère avec une dépression conique correspondante (157) dans l'écrou (155b), de manière à produire, lors du serrage de la vis de fixation (132b), un soyage conique (160) de la tôle intérieure (130b) du montant avant (113b) et de la plaque de fermeture (128b) (figure 16).

24. Unité préassemblée selon une ou plusieurs des revendications précédentes, caractérisée par le fait que, vu en plan, le tableau de bord (21) est chanfreiné latéralement (en 52, 53), de manière correspondant aux chanfreins des deux côtés de l'embrasure (11) du pare-brise, et par le fait que le tableau de bord (21), lorsqu'il est en position montée, est complété, pour ce qui est de ses parties latérales (54, 55) manquantes du fait des chanfreins (52, 53), par l'habillage intérieur des montants avant et des portes (13, 14) (figure 7).

25. Unité préassemblée selon une ou plusieurs des revendications précédentes, caractérisée par le fait que l'ensemble du tablier (19) présente un rebord coudé du genre bride (56) au moyen duquel il peut être assemblé, avec étanchéité, à un rebord correspondant (57) sur les parois adjacentes de la carrosserie (partie 17 de montage de roue et bas de caisse 15) (figures 1 et 8 à 10).

26. Unité préassemblée selon revendication 25, caractérisée par le fait que les bords coopérant (56, 57) du tablier (19) et des parois de carrosserie adjacentes (15, 17) forment, en partant de la feuillure de pare-brise (32, 49) et en passant par la partie (17) de montage de roue et par le bas de caisse (15), un canal d'étanchéité (58) destiné à être rempli avec un agent d'étanchéité durcissable (61), et peuvent être mutuellement assemblés à l'intérieur et/ou en dessous de ce canal d'étanchéité (58) (figures 9 et 10).

27. Unité préassemblée selon revendication 25, caractérisée par le fait que le bord (57b) de la carrosserie prévu pour l'assemblage au bord (56b) du tablier (19b) est à double paroi (63, 64) et, en partant de la feuillure de pare-brise (32, 49) et en passant par la partie de montage de roue (17) et le bas de caisse (15), forment un canal d'étanchéité (58b) dans lequel le bord (56b) du tablier (19b) pénètre par le haut lorsque l'unité est en position montée, et par le fait que ce canal d'étanchéité (58b) peut être rempli d'un agent adhésif durcissable (61) de manière que les deux bords coopérant (56b, 57b) puissent être collés l'un à l'autre (figure 10).

28. Unité préassemblée selon revendication 27, caractérisée par le fait que l'agent adhésif (61) est une colle au polyuréthane simultanément utilisable pour coller le pare-brise (par exemple 37).

29. Unité préassemblée selon revendication 27 ou 28, caractérisée par le fait que le bord (56b) du tablier (19b), servant de rebord de collage, est muni de bossages d'écartement (65) formés à la presse.

30. Unité préassemblée selon une ou plusieurs des revendications précédentes, caractérisée par le fait que le tablier (19c) et la traverse de tablier (20c) sont réalisés sous la forme d'une élément en matière plastique, en une ou plusieurs pièces, ou à partir de tôles pour constructions légères ou de matériaux composites (figure 13).

31. Procédé de montage d'une unité préassemblée selon une ou plusieurs des revendications précédentes, caractérisé par le fait que l'unité préassemblée (18) est introduite, en procédant du haut vers le bas, par l'embrasure (11) pour pare-brise aménagée dans la carrosserie (10) et est ensuite assemblée de manière étanche, par le tablier (19) et la traverse de tablier (20), aux parois de carrosserie (15, 17) adjacentes.

32. Procédé selon revendication 31, caractérisé par le fait que le pare-brise (37) et le capot ne sont montés qu'après la mise en place de l'unité préassemblée (18).

33. Procédé selon revendication 32, caractérisé par le fait que le capot est fixé par charnières à l'avant ou latéralement.

34. Procédé selon revendication 31, caractérisé par le fait que le pare-brise est mis en place avec l'habitacle ou en tant qu'unité préassemblée.

## Claims

1. Pre-assembled structural unit (18) for the dashboard region of motor vehicles, in particular motor cars, which can be assembled as an entity within the body (10) of the vehicle and essentially includes the following units:

a) a instrument panel (21) including all fittings, fuse boxes and electrical wiring, heating systems, with controls and air distributing system, and aerial,

b) a steering system (22) with steering wheel, steering gear (25), steering column casing and steering brackets,

c) pedals (23, 24) for clutch and brake and accelerator pedal each with pedal brackets, and

d) brake servo unit, windscreen wiper system, heating fan and air conditioning, wherein the body (10) comprises a dashboard (19) and a dashboard cross member (20) (so-called steering cross member) disposed beneath the windscreen (11), and wherein the above-mentioned units are directly or indirectly connected to the dashboard (19) when installed, and wherein the dashboard (19) serves as an assembly base for the structural unit (18) separately from the shell (10) and can be connected sealingly to the laterally adjoining body panels (e.g. 17) when the structural unit (18) is installed, characterised in that the dashboard cross member (20) also serves together with the dashboard (19) as an assembly base for the structural unit (18), separately from the shell (10), and when the structural unit (18) is installed the dashboard cross member (20) can also be connected sealingly to the laterally adjoining body panels (13, 14 17), wherein the sheet forming the dashboard (19) is welded to the dashboard cross member (20) or to a cross member sheet (33) forming part of the dashboard cross member (20).

2. Pre-assembled structural unit according to claim 1, characterised in that the dashboard cross member (20), which is of approximately U-shaped cross-section in the lateral regions, has one arm (31) of the U formed by the upper section of the dashboard sheet (19), and the second arm of the U formed by a cross member sheet (33) welded to the dashboard sheet (19) (at 32) (Figs. 2, 5 and 6).

3. Pre-assembled structural unit according to claim 1 or 2, characterised in that the upper section (31) of the dashboard sheet (19) is offset and, together with an additional sheet portion (29) welded to it, simultaneously forms the radiator tank (30) (Figs. 3 and 11).

4. Pre-assembled structural unit according to one or more of the preceding claims, characterised in that the dashboard cross member (20) can be bolted to the body (10) on both sides (at 42, 43), and the left and right front pillars (13, 14) of the body each comprise a cross member socket (34) therefor (Figs. 2–6).

5. Pre-assembled structural unit according to claim 4, characterised in that the rear portion (35) of the cross member socket (34) forms part of the inner region of the respective front pillar (13 or 14), and the front portion (36) (Fig. 4) of the cross member socket is formed by an extension of the associated lateral wheel mounting part (17).

6. Pre-assembled structural unit according to claim 4 or 5, characterised in that the cross member socket (34) is designed with a windscreen flange (49) for bonded windscreens (37) or for the windscreen rubber surround (Figs. 4 and 5).

7. Pre-assembled structural unit according to claim 6, characterised in that the dashboard cross member is simultaneously constructed as a windscreen flange at its upper edge (32), in such a way that the windscreen flange (49) of the cross member sockets (34) and the windscreen flange (32) of the dashboard cross member (20) complement each other to form a complete windscreen flange in the assembled position (Fig. 4).

8. Pre-assembled structural unit according to claim 6 or 7, characterised in that the portions (49) of the complete windscreen flange (32, 49) which are associated with the cross member sockets (34) comprise on each side a stepped extension which serves to mount the windscreen flange portion (32) formed on the dashboard cross member (20), and simultaneously to fix the assembled position of the structural unit (18) in a vertical direction.

9. Pre-assembled structural unit according to one or more of claims 4 to 8, characterised in that connecting surfaces (50) of the cross member sockets (34) on both sides, and connecting surfaces (51) of the dashboard cross member (20) cooperating therewith, are each of conical construction and serve for automatic centring with respect to the installed position of the structural unit (18) in the horizontal plane (Fig. 2).

10. Pre-assembled structural unit according to one or more of claims 4 to 9, characterised in that when bolting together the dashboard cross member (20) and the cross member sockets (34), conically bevelled bolts (38, 39) cooperate with correspondingly conical recesses (45) in the cross member sockets (34), in such a way that when the bolts are tightened, a so-called tapered rim hole is formed in the dashboard cross member sheet (at 42, 43) (Fig. 6).

11. Pre-assembled structural unit according to one or more of claims 1 to 4, characterised in that a closure plate (128, 128a, 128b1 129) is attached to the dashboard cross member (120) at each of its two ends adjoining the side body panels (130, 130a, 130b1 131), and the closure plates together with the dashboard cross member can be bolted to the respectively associated front pillar (113, 113b; 114) by mounting bolts (132, 132b) extending in the transverse direction of the vehicle (Figs. 14–16).

12. Pre-assembled structural unit according to claim 11, characterised in that the closure plates (128, 128a, 128b; 129) can be bolted to the inner sheet (laterally of the dashboard) (130, 130a, 130b; 131) of the respective front pillar (113, 113b; 114).

13. Pre-assembled structural unit according to claim 11 or 12, characterised in that the closure plates (128, 128a, 128b; 129) are coordinated in their contours with the shape of the respectively adjoining portions (130, 130a, 130b; 131) of the front pillars (113, 113b; 114), in such a way that when the structural unit (118) is installed, it is automatically centred relative to the body (110).

14. Pre-assembled structural unit according to claim 13, characterised in that the closure plates (128a) comprise at their front and rear ends outwardly offset extensions (143 and 144) which embrace front and rear guide shoulders (145 and 146) of the front pillar (113) in part (Fig. 15).

15. Pre-assembled structural unit according to claim 12, 13 or 14, characterised in that the inner sheet (130, 130a, 130b; 131) (dashboard sides) of the front pillars (113, 113b; 114) converge conically downwards, and the closure plates (128, 128a, 128b; 129) are attached to the dashboard cross member (120) in an inclined position corresponding to the angle of inclination of the inner front pillar sheets (130, 130a, 130b; 131).

16. Pre-assembled structural unit according to claims 13, 14 and 15, characterised in that the front and rear guide shoulders (145 and 146) of the respective front pillar (e.g. 113) diverge downwardly away from each other.

17. Pre-assembled structural unit according to claim 14, 15 or 16, characterised in that the closure plate extension (143) which cooperates with the front guide shoulder (145) of the front pillar (e.g. 113) is bent backwards through a total of approximately 180° and sealingly enters a sealing channel (148) formed on the front side of the front guide shoulder (145) and filled with hardenable adhesive (151) (Fig. 15).

18. Pre-assembled structural unit according to claim 17, characterised in that the forwardly opening sealing channel (147) is formed between an offset (148) of the front guide shoulder (145) of the front pillar and a correspondingly bent sheet portion (150) which is spot welded to the guide shoulder (145).

19. Pre-assembled structural unit according to one or more of claims 11 to 18, characterised in that the mounting bolts (132) which serve to bolt the closure plates (128, 128a; 129) pass through the respective front pillar (e.g. 113) from the outside towards the inside with their heads (152) supported against the outer wall (135) of the respective front pillar (e.g. 113), and between the inner side of the front pillar outer wall (135) and the outer side of the inner front pillar sheet (e.g. 130a), concentrically surrounding the respective mounting bolt (132) is in each case disposed a distance tube (156) (Figs. 14 and 15).

20. Pre-assembled structural unit according to claim 19, characterised in that the mounting bolt (132, 132b) cooperates with a nut (155, 155b) which is supported against the inner side of the closure plate (128, 128a, 128b; 129) and preferably welded to the closure plate.

21. Pre-assembled structural unit according to one or more of claims 11 to 18, characterised in that the mounting bolts (132b) serving to bolt the closure plates (128b) pass through the inner sheet (130b) of the respective front pillar (113b) from the outside to the inside, with their heads (152b) supported against the outer wall of the respective inner sheet (130b) (Fig. 16).

22. Pre-assembled structural unit according to claim 21, characterised in that an opening (161) closable by a flexible plug (162) or the like is provided in each case in the outer wall (135b) of the front pillars, for introducing the mounting bolts (132b) into the interior of the front pillars (e.g. 113b) for assembly purposes.

23. Pre-assembled structural unit according to claim 20, 21 or 22, characterised in that when the closure plate (128b) is bolted to the front pillar (113b), a conically bevelled (at 159) mounting bolt (132b) cooperates with a corresponding conical recess (157) in the nut (155b), in such a way that when the mounting bolt (132b) is tightened, a so-called tapered rim hole (160) is formed in the inner sheet (130b) of the front pillar (113b) and the closure plate (128b) (Fig. 16).

24. Pre-assembled structural unit according to one or more of the preceding claims, characterised in that the instrument panel (21) is laterally chamfered (at 52, 53) to correspond to the incline on both sides of the windscreen opening (11), as seen in plan view, and in the installed position the instrument panel (21) is complemented, with respect to its side portions (54, 55) which are missing as a result of tapering (52, 53), by the inside panelling of the respectively associated front pillar and the doors (13 and 14) (Fig. 7).

25. Pre-assembled structural unit according to one or more of the preceding claims, characterised in that the whole dashboard (19) comprises an offset flange-like edge (56) by means of which it can be connected sealingly to a corresponding edge (57) on the adjoining body panels (wheel mounting 17 and underbody 15) (Figs. 1 and 8–10).

26. Pre-assembled structural unit according to claim 25, characterised in that the cooperating edges (56, 57) of dashboard (19) and adjoining body panels (15, 17) – starting from the windscreen flange (32, 49) and extending peripherally over wheel mounting (17) and underbody (15) – form a sealing channel (58) which can be filled with curable sealant (61), and can be joined together inside and/or beneath the sealing channel (58) (Figs. 9 and 10).

27. Pre-assembled structural unit according to claim 25, characterised in that the body edge (57b) provided for connection to the edge (56b) of the dashboard (19b) is doublewalled (63, 64) and – starting from the windscreen flange (32, 49) and extending peripherally over wheel mounting (17) and underbody (15) – forms a sealing channel (58b) into which the edge (56b) of the dashboard (19b) extends from above in the installed position of the structural unit (18), and the sealing channel (58b) can be filled with curable adhesive (61) in such a way that the two cooperating edges (56b, 57b) can be bonded together (Fig. 10).

28. Pre-assembled structural unit according to claim 27, characterised in that a polyurethane adhesive which can simultaneously be used to bond the windows (e.g. 37) in place serves as the adhesive (61).

29. Pre-assembled structural unit according to claim 27 or 28, characterised in that the edge (56b) of the dashboard (19b) which serves as the bonding flange is provided with stamped spacer studs (65).

30. Pre-assembled structural unit according to one or more of the preceding claims, characterised in that dashboard (19c) and dashboard cross member (20c) are constructed as a single-piece or multi-piece plastic element or from light metal sheets or laminated materials (Fig. 13).

31. Method for the installation of a pre-assembled structural unit according to one or more of the preceding claims, characterised in that the pre-assembled structural unit (18) is inserted from above through the windscreen opening (11) in the body (10) and then joined sealingly at dashboard (19) and dashboard cross member (20) to the adjoining body panels (15, 17).

32. Method according to claim 31, characterised in that windscreen (37) and bonnet are not assembled until after installation of the pre-assembled structural unit (18).

33. Method according to claim 32, characterised in that the bonnet is hinged at the front or side.

34. Method according to claim 31, characterised in that the windscreen is inserted together with the cockpit or as a pre-assembled structural unit.

1/9

FIG.1

FIG.2

FIG.3

FIG.4

2/8

FIG.3

FIG.6

FIG.7

FIG.8

4 / 9

FIG.9

FIG.10

FIG.11

6/9

FIG.12

FIG.13

7 / 9

FIG.14

FIG. 15

FIG. 16